# EUROPÄISCHE PATENTANMELDUNG

(11) **EP 4 636 202 A1**
(43) Veröffentlichungstag der Anmeldung: **22.10.2025**
(21) Anmeldenummer: 25168506.1
(22) Anmeldetag: 04.04.2025
(51) Int. Cl.: E04H 5/02, B01D 46/00

(54) **ANLAGE UND VERFAHREN ZUR ERRICHTUNG EINER SOLCHEN**

(30) Priorität: 12.04.2024 DE 102024110262
(71) Anmelder: Werner Gorzawski GmbH & Co. KG, 73066 Uhingen (DE)
(72) Erfinder: Gorzawski, Ralph, 73066 Uhingen (DE)
(74) Vertreter: Rüger Abel Patentanwälte PartGmbB

(57) **Zusammenfassung**

Die erfindungsgemäße Anlage (10) umfasst wenigstens zwei Transporteinheiten (11, 12), die Transporteinheiten übergreifende Aggregate, insbesondere die Transporteinheiten übergreifende Behälter aufweisen, die entsprechend der von den Transporteinheiten vorgegebenen Unterteilung in Teilgehäusen (25, 26) unterteilt sind. Vorzugsweise sind alle Schnittstellen von Transporteinheiten übergreifenden Behältern in einem Zwischenraum (23) zwischen der Oberseite (21) der unteren Transporteinheit (11) und der Unterseite (22) an der oberen Transporteinheit (12) angeordnet. Dieser Zwischenraum ist vorzugsweise zu eng, um nach dem Stapeln der beiden Transporteinheiten Zugang zu gewähren. An den Behälterteilen und den Transporteinheiten vormontierte Flanschelemente (44, 54) stellen sowohl die Verbindung zwischen den Behälterteilen (25, 26) und den Transporteinheiten (11, 12) her, als auch ermöglichen sie eine Endmontage vom Behälterinnenraum her. Damit ermöglicht die Erfindung eine weitgehende Vormontage der Transporteinheiten und eine schnelle, sichere und effiziente Errichtung der Anlage am Aufbauort.

## Beschreibung

Die Erfindung betrifft eine Anlage, insbesondere eine Anlage zur Luftreinigung, insbesondere zur Luftfilterung, Staubabscheidung, Aerosolabscheidung oder dergleichen.

Eine beispielhafte Anlage zur Luftreinigung kann der AT 167838B entnommen werden. Diese Anlage enthält mehrere Gefäße zur Staubabscheidung, wobei die einzelnen Komponenten der Anlage über Flansche miteinander verbunden sind.

Eine weitere Filteranlage ist aus der DE 37 22 826 A1 bekannt. Diese Filteranlage ist modular aufgebaut und enthält mehrere in verschiedenen Etagen in einem Gerüst angeordnete Filterpatronen.

Der DE 603 10 692 T2 können Filterschläuche entnommen werden, die in einem großen Filtergehäuse parallel zueinander angeordnet sind. Solche Filteranlagen können Transportprobleme verursachen, wenn sie aus in zusammengebautem Zustand von einem Herstellort zu einem Installationsort zu bringen sind. Die Filtergehäuse können Abmessungen aufweisen, die sie für den Straßentransport ungeeignet machen. Dies insbesondere, wenn die Filteranlage am Ort ihrer Errichtung ein mehrstöckiges Gehäuse zur Unterbringung erfordert.

Davon ausgehend ist es Aufgabe der Erfindung, ein verbessertes Anlagenkonzept sowie ein verbessertes Konzept zum Aufbau einer solchen Anlage anzugeben.

Diese Aufgabe wird jeweils für sich mit einer Anlage mit den Merkmalen des Anspruchs 1 sowie mit einem Verfahren zur Errichtung dieser Anlage mit den Merkmalen des Anspruchs 15 gelöst:
Die erfindungsgemäße Anlage kann insbesondere als Anlage zur Luftreinigung ausgebildet sein, wobei das Anlagenkonzept auch für andere Anlagen anwendbar ist. Insbesondere eignet sich das erfindungsgemäße Konzept für Anlagen, die Kessel, Filter oder sonstige Behälter aufweisen, die bei aufgebauter Anlage in einem Anlagengebäude mehr als ein Stockwerk einnehmen.

Die Anlage umfasst wenigstens zwei Transporteinheiten mit jeweils eigenen Gehäusen, die übereinander anordenbar sind, um ein Anlagengebäude zu errichten. Die Transporteinheiten sind vorzugsweise Quaderförmig ausgebildet und an ihren Ecken miteinander verbindbar. Vorzugsweise erfolgt die Verbindung derart, dass zwischen der Oberseite der unteren Transporteinheit und der Unterseite der oberen Transporteinheit ein Zwischenraum verbleibt, der jedoch typischerweise so eng ist, dass er für Monteure unzugänglich ist. Beispielsweise kann die lichte Höhe zwischen der Oberseite der unteren Transporteinheit und der Unterseite der oberen Transporteinheit auf ein Maß geringer als 30 cm beschränkt sein. Dennoch ist der Zwischenraum zur Aufnahme von Verbindungsmitteln geeignet, beispielsweise von Verbindungsmitteln zur Verbindung der Gehäuse der beiden Transporteinheiten untereinander.

In den Transporteinheiten sind Behälterteile angeordnet, die Teilkomponenten des sich über mindestens zwei Transporteinheiten erstreckenden Behälters sind. In montiertem Zustand bilden die Behälterteile den Behälter einer Funktionseinheit. Eine solche Funktionseinheit kann beispielsweise ein Filtergehäuse, ein Zyklonabscheider, ein druckloser Behälter, ein mit Unterdruck beaufschlagter Behälter, ein Druckbehälter oder dergleichen mehr sein. Zur Verbindung der beiden Behälterteile untereinander sind Verbindungselemente vorgesehen, die vorzugsweise von einem begehbaren von dem Behälter umschlossenen Innenraum her montierbar sind. Dabei ist vorzugsweise sowohl dem ersten wie auch dem zweiten Behälterteil jeweils ein Verbindungselement, bspw. ein Flanschelement zugeordnet. Durch dieses Konzept können die Transporteinheiten aufeinander aufgesetzt und miteinander verbunden werden, wonach die Verbindung der in den Gehäusen vormontierten Behälterteile durch einen in dem Innenraum des Behälters befindlichen Monteur erfolgt. Der zu montierende Behälter weist dazu einen Mannzugang auf. Es ist dabei aber kein Zugang zu dem zwischen der Unterseite des oberen Gehäuses und der Oberseite des unteren Gehäuses eingeschlossenen Zwischenraum nötig.

Das erfindungsgemäße Konzept sieht die Aufteilung eines Anlagengebäudes in Transporteinheiten und die Unterteilung von Behältern, die höher sind als eine einzige Transporteinheit in Behälterteile vor. Dies ermöglicht einerseits die Vormontage der Transporteinheiten der Anlage an einem Werkort, den Transport der Transporteinheiten mittels LKW über öffentliche Straßen sowie die effiziente Errichtung der Anlage am Aufbauort mit geringem Montageaufwand.

Vorzugsweise sind die Gehäuse der Transporteinheiten durch Schiffscontainer gebildet. Die Verbindungsstelle zwischen den Behälterteilen kann zwischen den Gehäusen angeordnet sein und zwar auch dann, wenn dieser Zwischenraum von außen nicht zugänglich ist. Dazu können die Schiffscontainer oder sonstigen Gehäuse durch standardisierte Verbinder miteinander verbunden werden wie sie zur Verbindung der Eckbeschläge von Schiffscontainern üblich sind. Zur Montage können die Gehäuse bzw. Schiffscontainer wie zum Containertransport üblich aufeinander aufgesetzt und miteinander verbunden werden. Im einfachsten Fall können die Eckbeschläge der Schiffscontainer ineinandergreifend positioniert werden und durch Schwerkraft ineinander ruhen oder mittels Bolzen ineinander gesichert werden. Werden als Verbindungsmittel die handelsüblichen Eckverbinder für Seecontainerbeschläge eingesetzt, koppeln diese sowohl an den Eckbeschlag des oberen Containers, wie auch an den Eckbeschlag des anderen Containers und spannen diese fest. Während im erstgenannten Fall nur ein minimaler Abstand zwischen der Oberseite des unteren Containers und der Unterseite des oberen Containers verbleibt, schaffen die Eckverbinder einen geringfügig größeren Vertikalabstand. Dieser kann so groß sein, dass manueller Zugang zu dem Zwischenraum möglich ist. Bevorzugt ist der Abstand jedoch geringer.

Die Verbindungsstelle der Behälterteile ist vorzugsweise so ausgebildet, dass nach der Montage des Behälterteils in dem Gehäuse bzw. Schiffscontainer kein Zugriff mehr zu der Verbindung zwischen dem Gehäuse und dem Behälterteil erforderlich ist. Beispielsweise kann ein nach außen gerichteter, an dem Behälterteil vorgesehener Flansch über ein Flanschelement mit einem Träger des Gehäuses verbunden werden. Das Flanschelement weist dazu vorzugsweise einen von dem Behälterinnenraum weg nach außen gerichteten Abschnitt zur Verbindung mit dem Gehäuse sowie einen in den Behälterinnenraum hinein gerichteten Abschnitt zur späteren Verbindung der Flanschelemente und somit der Behälterteile untereinander auf.

Das Flanschelement ermöglicht auf diese Weise nicht nur eine einfache Montagereihenfolge, sondern zugleich einen Toleranzausgleich im Hinblick auf eine statische Überbestimmung, die sich aus der Fixierung der Gehäuse (See oder Schiffscontainer) untereinander sowie durch die Verbindung der vormontierten und somit fest in den Gehäusen angeordneten Behälterteile ergibt. Insbesondere können die Flanschelemente dazu eine (geringfügige) Nachgiebigkeit aufweisen. Das Flanschelement weist somit einen nach innen gerichteten Flanschabschnitt sowie einen nach außen gerichteten Flanschabschnitt auf und ist an jeder Transporteinheit vormontiert.

Weiter ist es möglich, zwischen den Behälterteilen wirksame Ausrichtmittel vorzusehen. Solche Ausrichtmittel können z.B. an den Flanschelementen angeordnet und zwischen diesen wirksam sein. Ausrichtmittel können z.B. Passbolzen sein, die an dem Flanschelement des einen Behälterteils angeordnet sind und in Passbohrungen passen, die in dem Flanschelement des anderen Behälterteils angeordnet sind. So können die Ausrichtmittel wirksam werden, d.h. die Ausrichtbolzen in die ihnen zugeordneten Passbohrungen eindringen, wenn die Transporteinheiten aufeinandergesetzt werden. Diese Ausrichtmittel sind dazu eingerichtet, nicht nur die Behälterteile, sondern insbesondere auch die Transporteinheiten insgesamt zueinander auszurichten.

Weitere Einzelheiten vorteilhafter Ausführungsformen der Erfindung ergeben sich aus der Zeichnung sowie der zugehörigen Beschreibung und Unteransprüchen.

In der Zeichnung zeigen:
Figur 1 eine erfindungsgemäße Anlage, in schematisierter Perspektivansicht,
Figur 2 eine etwas modifizierte erfindungsgemäße Anlage, in schematisierter Vertikalschnittdarstellung,
Figur 3 ein Konstruktionsdetail an der Oberseite einer Transporteinheit,
Figur 4 das Konstruktionsdetail nach Figur 3, in Seitenansicht, und
Figur 5 die Verbindungsstelle zwischen den Behälterteilen und Gehäusen der Transporteinheiten, in vertikal geschnittener schematisierter Darstellung,
Figur 6 und 7 alternative Ausgestaltungen der Verbindungsstelle zwischen den Behälterteilen und Gehäusen der Transporteinheiten, in vertikal geschnittener schematisierter Darstellung.

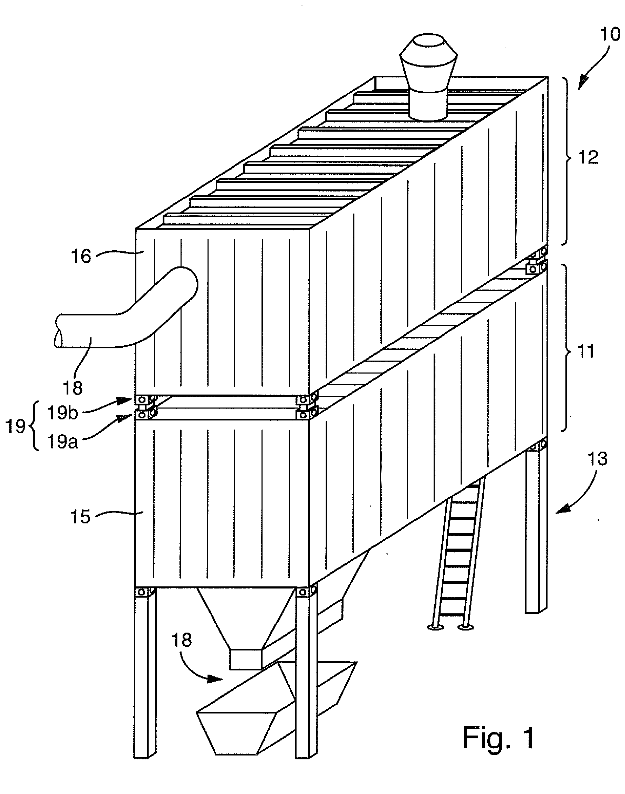

In Figur 1 ist eine beispielsweise zur Abluftbehandlung vorgesehene Anlage 10 veranschaulicht, die beispielsweise als Filteranlage aufgebaut sein kann. Das nachfolgend erläuterte Anlagenkonzept kann aber auch bei anderen Anlagen insbesondere zur Behandlung gasförmiger Stoffströme oder dergleichen eingesetzt werden.

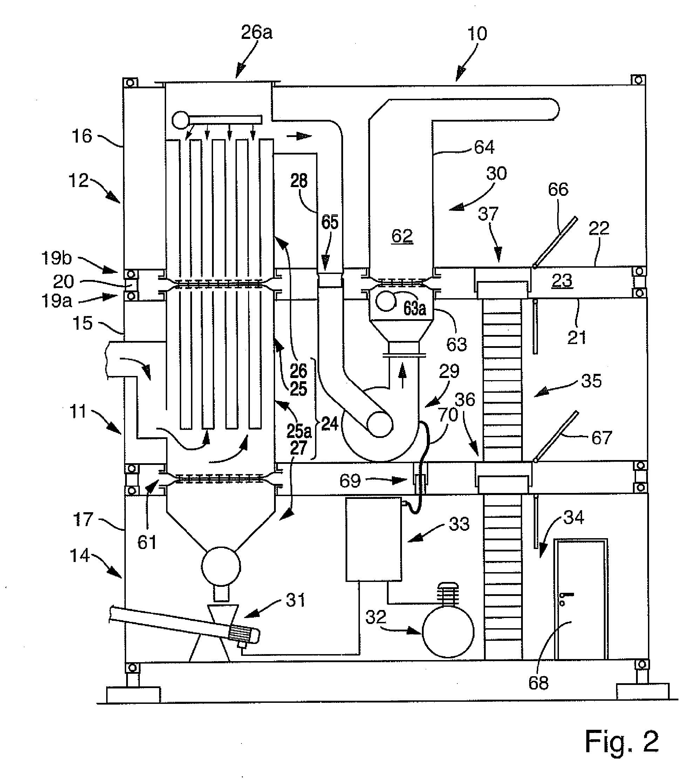

Die Anlage 10 umfasst wenigstens eine erste Transporteinheit 11 und eine zweite Transporteinheit 12, die, wenn die Anlage 10 aufgebaut ist, übereinandergestapelt angeordnet sind. Dabei kann die erste Transporteinheit 11 beispielsweise auf einem Gestell 13 aufgebaut sein. Das Gestell 13 und die Transporteinheiten 11, 12 bilden ein Anlagengebäude. Wie das Ausführungsbeispiel nach Figur 2 zeigt, kann anstelle des Gestells 13 auch eine weiteren Transporteinheit 14 vorgesehen sein, auf der die erste Transporteinheit 11 und die zweite Transporteinheit 12 angeordnet, d.h. aufgestapelt sind. Das Anlagengebäude besteht dann aus den drei Transporteinheiten 11, 12 und 14, die vertikal übereinander aufgestapelt sind. Weitere Transporteinheiten können vorgesehen sein.

Jede Transporteinheit (11, 12 und 14) weist jeweils ein Gehäuse 15, 16 (und 17 in Figur 2) auf, das vorzugsweise als LKW-transportfähige Einheit ausgebildet ist. In der bevorzugten Ausführungsform sind die Gehäuse 15, 16, 17 sogenannte Schiffscontainer oder Überseecontainer mit für den Containertransport genormten Maßen, beispielsweise Vierzig-Fuß-Container. Diese Gehäuse sind im wesentlichen quaderförmig ausgebildet und bestehen aus Stahlblech.

Erfindungsgemäß werden die Gehäuse 15, 16, 17 an einem Werk- oder Herstellort, z.B. einem Fertigungsbetrieb, mit den nötigen Einbauten versehen und danach im Straßentransport an den Aufbauort verfahren. Dort können sie zum Beispiel per Kran in die in Figur 1 und 2 veranschaulichte Stapelposition verbracht und fertig montiert werden. Die Montage beschränkt sich auf die Herstellung einiger weniger Verbindungen, die am Aufbauort mit leichtem Werkzeug ausführbar sind. Jedes Gehäuse 15, 16, 17 bildet dann jeweils eine Etage des Anlagengebäudes der Anlage 10.

Die fertige beispielsweise aus Figur 1 ersichtliche der Abluftbehandlung dienende Anlage muss lediglich über ein Zugangsrohr 18 mit einer betrieblichen Abluftanlage verbunden und an eine Stromversorgung angeschlossen werden, wonach die Anlage betriebsbereit ist. Wenn sie der Feststoffabscheidung, beispielsweise der Stauabscheidung dient, kann unterhalb der ersten Transporteinheit 11 eine geeignete Auffangeinrichtung 18 vorgesehen sein, beispielsweise in Gestalt einer Wanne oder dergleichen. Andere zur Reststoffsammlung oder Reststoffausleitung dienende Sammel- oder Fördereinrichtungen können alternativ oder zusätzlich ebenfalls vorgesehen sein. Außerdem können bedarfsweise auch weitere Verbindungen zwischen der Anlage 10 und der Umgebung hergestellt werden, z.B. Verbindungen zu einer externen Wasserversorgung, Abwasser, Druckluftversorgung, Datenverbindung oder dergleichen.

Es ist möglich, die Transporteinheiten 10, 11 so aufeinander aufzusetzen, dass deren Eckbeschläge 19 wie bei Schiffscontainern üblich ineinandergreifen, sodass die Schiffscontainer bzw. Gehäuse 11, 12 formschlüssig gegen seitliches Verrutschen gesichert sind. In vielen Fällen genügt es, wenn die zweite Transporteinheit 12 lediglich durch ihre Schwerkraft auf der ersten Transporteinheit 11 gesichert ist. Alternativ können die Eckbeschläge 10 (19a, 19b) untereinander verbunden werden, um eine feste Verbindung zwischen den Transporteinheiten 11, 12 herzustellen. Auch können zwischen den Eckbeschlägen 19a, 19b, wie es Figur 2 veranschaulicht ist, Verbinder 20 angeordnet sein, die den Vertikalabstand zwischen den Transporteinheiten 11, 12 vergrößern. Außerdem können die Abstandshalter 20 als Verriegelungsmittel ausgebildet sein, um die Eckbeschläge 19a, 19b fest miteinander und somit die Transporteinheiten 11, 12 fest miteinander zu verbinden.

Zwischen der Oberseite 21 der ersten Transporteinheit 11 und der Unterseite 22 der zweiten Transporteinheit 12 ist ein Abstand 23 ausgebildet, der aber typischerweise aufgrund seiner geringen Höhe für Montagepersonal unzugänglich ist. Dennoch wird es als vorteilhaft angesehen, Verbindungen zwischen Einbauten der Transporteinheiten 11, 12 genau in diesem Zwischenraum 23 anzuordnen. Damit wird sichergestellt, dass auch Einbauten, die sich über mehrere Transporteinheiten erstrecken, beim Transport der jeweiligen Transporteinheit 11, 12 nicht wesentlich über deren Außenumriss herausragen. Dies wird nachstehend am Beispiel der Figur 2 erläutert:

Über die Transporteinheiten 11, 12, 14 erstreckt sich bei der Ausführungsform nach Figur 2 ein Filterbehälter 24, der mehrere Behälterteile 25, 26 sowie gegebenenfalls auch 27 umfasst. Dabei enthält jede Transporteinheit 11, 12, 14 genau einen Behälterteil 25, 26, 27, der jeweils in dem jeweiligen Gehäuse 15, 16, 17 der Transporteinheit 11, 12, 14 fest angeordnet ist und über deren Außenprofil nicht oder nicht wesentlich hinausragt. Der Filterbehälter 24 ist somit entsprechend den Transporteinheiten 11, 12, 14, d.h. entsprechend den Etagen der Anlage 10 segmentiert. Dies gilt sowohl für Anlagen, die aus lediglich zwei Transporteinheiten, zum Beispiel den Transporteinheiten 11, 12 bestehen, so wie auch für Anlagen die mehrere solcher Transporteinheiten aufweisen.

Der Filterbehälter 24 kann mit einem verschließbaren Mannzugang versehen sein, um einem Monteur Zugang zu dem Behälterinnenraum zu verschaffen. Dazu kann an dem Behälterteil 25 eine mit einer Luke, Klappe, Deckel oder Tür versehene Einstiegsöffnung 25a vorgesehen sein. Zusätzlich oder alternativ kann an dem Behälterteil 26 oder dem Behälterteil 27 ein Mannzugang vorgesehen sein. Außerdem kann der Filterbehälter 24 mit einem Berstschutz versehen sein. Dazu kann der obere Behälterteil 26 an seinem oberen, durch die Decke des oberen Gehäuses stehenden Ende mit einer Berstscheibe 26a versehen sein. Bedarfsweise kann die Berstscheibe 26a für einen Monteur als Zugang für einen Monteur vorgesehen werden.

In jeder Transporteinheit 11, 12, 14 können nicht nur die Behälterteile 25, 26, 27, sondern auch andere Anlagenteile vormontiert sein, wie beispielsweise Rohrleitungen 28, Gebläse 29, Schalldämpfer 30, Heizungen, Wärmerückgewinnungseinrichtungen, Wärmepumpen, Luftbehandlungseinrichtungen allgemein, Austrageinrichtungen 31, Kompressoren 32, Schaltschränke 33, Leitern 34, 35 sowie Mannübergänge 36, 37 in den Decken und Böden jeder Transporteinheit 11, 12, 14. Soweit sich solche Anlagenteile über zwei oder mehrere Etagen erstrecken, sind sie, zumindest vorzugsweise, innerhalt des Zwischenraums 23 in Teilkomponenten unterteilt.

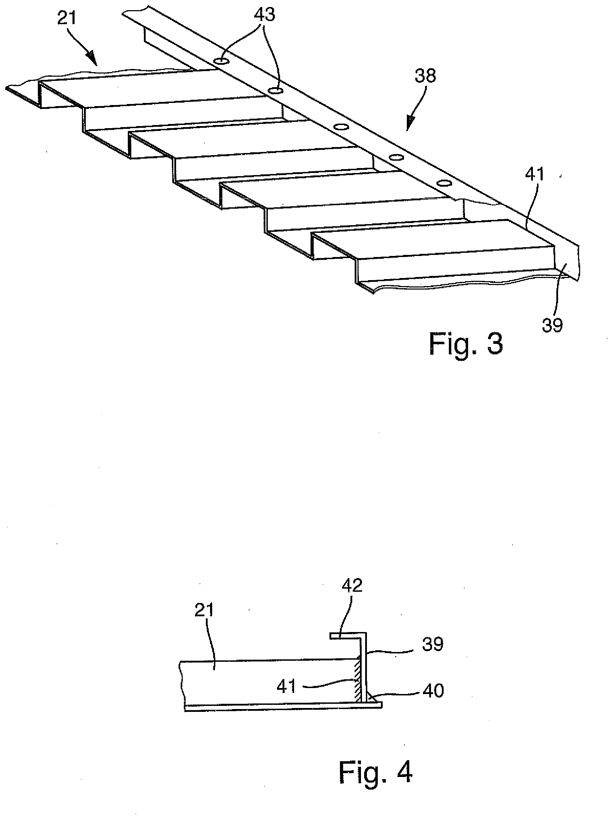

Der Behälterteil 25 durchsetzt den Boden 22 der zweiten Transporteinheit 12. Der Behälterteil 26 durchsetzt die Oberseite 21 der ersten Transporteinheit 11. Zur Verbindung der Behälterteile 25, 26 miteinander wird nachstehend auf die Figuren 3, 4 und 5 verwiesen.

Figur 3 veranschaulicht einen Ausschnitt aus der Oberseite 21 der Transporteinheit 11 im Bereich einer Öffnung 38, durch die sich das obere Ende des Behälterteils 26 erstreckt. Die Oberseite 21 besteht vorzugsweise aus gewelltem Blech, das infolge seiner Formgebung biegesteif ist. Im Bereich der Öffnung 38 ist die Integrität der Oberseite 21, d.h. des gewellten Blechs unterbrochen. Zur Aussteifung ist die Öffnung 38 dort von einem quer zu den Wellen des gewellten Blechs angeordneten Profilelement 39 umgeben. Das Profilelement kann als Winkelprofil ausgebildet sein. Unabhängig davon kann sich das Profilelement um die gesamte Öffnung 38 herum erstrecken. Das Profilelement 39 kann über Schweißnähte mit dem die Oberseite 21 bildenden gewellten Blech verbunden ist. Dabei ist mindestens ein Teil der Schweißnaht 40 auf der der Öffnung 38 zugewandten Seite des Profilelements 39 angeordnet. Zusätzlich oder alternativ kann eine Schweißnaht 41 an der der Öffnung 38 abgewandten Seite des Profilelements 39 angeordnet sein.

Wenn das Profilelement 39 als Winkelprofil ausgebildet ist, weist es einen vertikal orientierten mit der Oberseite 21 verschweißten Schenkel sowie einen vorzugsweise horizontal orientierten, von der Öffnung 38 wegweisenden Schenkel 42 auf. Dieser Schenkel 42 ist mit Bohrungen 43 zur Befestigung eines Flanschelements 44 versehen.

Das Flanschelement 44 ist mit einem Radialflansch 45 des Behälterteils 26 verschraubt. Der Radialflansch 45 ist vorzugsweise von dem Behälterteil 26 weg zu dem Profilelement 39 hin orientiert. Dabei endet der Radialflansch 45 vorzugsweise in einer Distanz D von dem Profilelement 39. Diese Distanz D wird von dem Flanschelement 44 überbrückt. Mit seinem radial nach außen, d.h. zu der Oberseite 21 hinweisenden Schenkel 46 liegt das Flanschelement 44 auf dem horizontalen Schenkel 42 des Profilelements 39 auf und kann dort mit diesem verschraubt oder auch verschweißt sein. Wenn eine Schweißverbindung vorgesehen wird, kann allerdings für das Profilelement 39 anstelle des Winkelprofils auch lediglich ein Flachprofil verwendet werden, sodass der horizontale Schenkel 42 entfällt. Das Flanschelement 44 kann dann direkt mit dem Vertikalabschnitt des Profilelements 39 verschweißt sein.

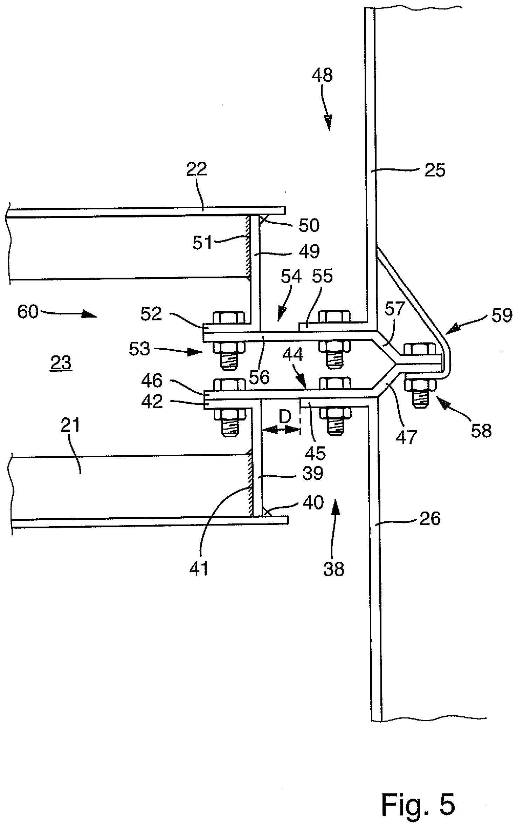

Das Flanschelement 44 weist außerdem einen sich in den Behälter erstreckenden inneren Abschnitt 47 auf, der, wie in Figur 5 dargestellt, gekröpft ausgebildet sein kann. An seinem inneren Ende kann er horizontal orientiert und mit Befestigungsöffnungen versehen sein, um Befestigungsbolzen 58 aufzunehmen. Das Flanschelement kann als einteiliger Ring ausgebildet sein, dessen Form einem Horizontalschnitt durch den Behälter 24 entspricht. Er kann alternativ aus mehreren Abschnitten zusammengesetzt sein, die zusammen ein ringförmiges Element ergeben.

Der obere Behälterteil 25 ist auf ähnliche Weise mit der Unterseite 22 der zweiten Transporteinheit verbunden. Diese weist wiederum eine Öffnung 48 auf, durch die sich ein unterer Abschnitt des Behälterteils 45 erstreckt. Die Öffnung 48 wird von einem Profilelement 49 umgeben, das bezüglich einer Horizontalebene spiegelbildlich zu dem Profilelement 39 ausgebildet und angeordnet sein kann. Beispielsweise kann das Profilelement 49 als Winkelprofil oder auch als Flachprofil ausgebildet sein. Das Profilelement 49 kann über eine zu der Öffnung 48 hingewandte Schweißnaht 50 und/oder über eine von der Gegenseite liegende Schweißnaht 51 mit der Unterseite 28 verbunden sein. Die Profilelemente 39, 49 sind an den inneren Abschnitten 47, 57 aufeinander zu gekröpft, so dass sie einerseits innen flach aufeinander aufliegen und andererseits mittig und außen im Vertikalabstand zueinander liegen.

Das Profilelement 49 kann sich einteilig oder in Stücken um die gesamte Öffnung 48 herum erstrecken. Es kann einen von der Öffnung 48 wegweisenden Schenkel 52 aufweisen und somit als Winkelprofil ausgebildet sein. Alternativ kann ein solcher Schenkel 52 fehlen. Das Profilelement 49 ist dann ein Flachstahl. Ähnlich wie das Profilelement 39 mit der Oberseite 21 kann das Profilelement 49 mit der Unterseite 22 verbunden sein. Hinsichtlich seiner Schweißverbindung mit der Unterseite 22 gelten die zu dem Profilelement 39 gegebenen Erläuterungen analog.

Mit dem Profilelement 49 kann beispielsweise über die in Figur 5 angedeuteten Bolzen 53, mittels eines Flanschelements 54, ein nach außen gerichteter Radialflansch 55 des oberen Behälterteils 25 verbunden sein. Das Flanschelement 54 weist dazu einen nach außen gerichteten Abschnitt 56 auf, der den horizontalen Schenkel 52 mit dem Radialflansch 55 des Behälterteils 25 verbindet und dabei wiederum einen Abstand zwischen dem äußeren Ende des Radialflanschs 55 und dem Profilelement 49 überbrückt. Außerdem kann das Flanschelement 54 einen nach innen gerichteten Abschnitt 57 aufweisen, der wie Figur 5 darstellt, stumpfwinklig gekröpft ausgebildet sein kann und mit seinem horizontalen Ende auf dem horizontalen Ende des inneren Abschnitts 47 des Flanschelements 44 aufliegt. Zur Verbindung kann eine Reihe von Schrauben 58 dienen, die einen sich um den Innenraum des Behälters herum erstreckenden Kranz bilden. Die Schrauben können durch einzelne Abdeckelemente 59 abgedeckt sein, die aneinander anschließend einen sich entlang des Innenumfangs des Behälters 24 erstreckenden Ring bilden, um Staubansammlungen zu reduzieren.

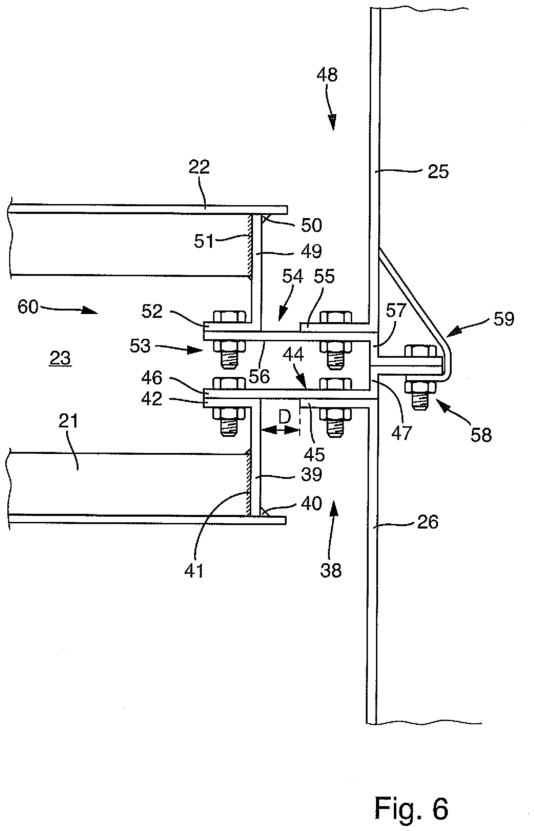

Die Flanschelemente 44, 54 können, wie es Figur 6 veranschaulicht, auch rechtwinklig gekröpft ausgebildet sein. Zwischen den horizontalen Abschnitten des Flanschelements 44, 54 ist dann ein vertikal orientierter Abschnitt vorhanden.

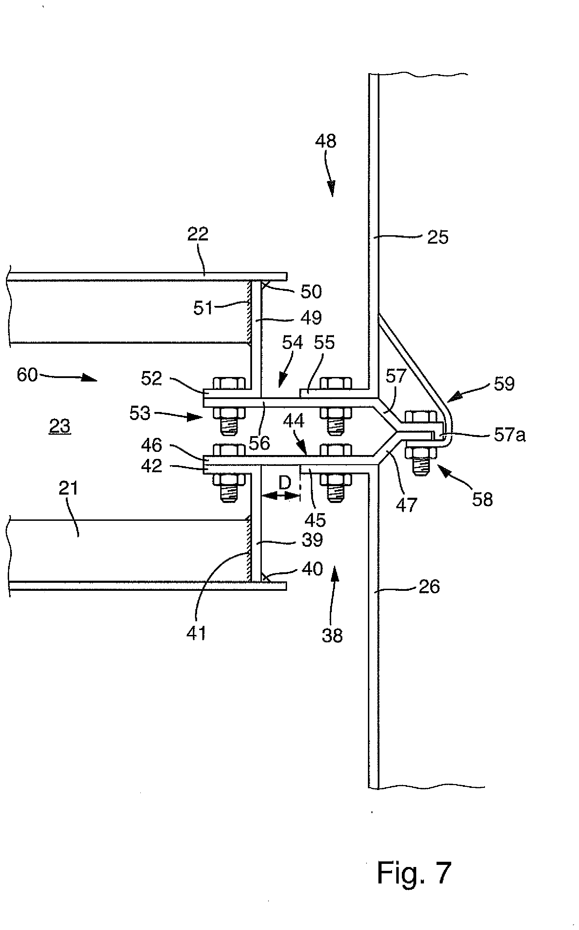

Weitere Abwandlungen sind möglich. Z.B. können die Flanschelemente 44, 54 sowohl der Ausführungsform nach Figur 6 als auch der Ausführungsform nach Figur 5 innerhalb des Behälters 24 angeordnete Ausrichtmittel aufweisen. Letzteres zeigt Figur 7. Dazu weist eines der Flanschelemente, bspw. das Flanschelement 54 einen abgewinkelten, das andere Flanschelement 44 übergreifenden abgewinkelten Abschnitt 57a auf. Dieser Abschnitt 57a kann sich entlang des gesamten Innenumfangs des Flanschelements 47 erstrecken. Es kann, wie in Figur 7 dargestellt, unten bündig mit des Flanschelement 47 abschließen oder sich weiter nach unten erstrecken. In letzterem Fall entfällt das Abdeckelement 59.

Zur Vormontage an einer Werkstelle, zum Beispiel einem Montagebetrieb, werden zunächst die Gehäuse 15, 16, beispielsweise als Schiffscontainer bereitgestellt und mit den nötigen Öffnungen, beispielsweise den Öffnungen 38, 48 versehen. Um die Öffnungen 38, 48 herum werden die Profilelemente 39, 49 platziert und mit der Oberseite 21 bzw. der Unterseite 22 verschweißt. Dabei ist insbesondere für die Schweißnähte 40, 50 eine besonders gute Zugänglichkeit gegeben. Bedarfsweise können an der gegenüberliegenden Seite der Profilelemente 49, 59 zusätzlich oder alternativ die Schweißnähte 41, 51 entweder über die gesamte Länge des angeschnittenen Wellenprofils oder auch lediglich über Teillängen angebracht werden.

Zur weiteren Montage wird der Behälterteil 26 in der ersten Transporteinheit platziert. Die Behälterteile 26, 25 können zuvor mit den Flanschelementen 44, 54 verschraubt worden sein. Dies kann aber auch nach der Platzierung des Behälterteils 25, 26 in der jeweiligen Öffnung 48, 38 geschehen. Sind die Behälterteile 25, 26 derart platziert, können der Schenkel 42 mit dem äußeren Abschnitt 46 und der Schenkel 52 mit dem äußeren Abschnitt 56 verschraubt werden. Die Profilelemente 44, 54 bilde ein Verbindungsmittel 60.

Es wird darauf hingewiesen, dass der erste Behälterteil 26 und der weitere Behälterteil 27 ebenfalls durch ein entsprechendes Verbindungsmittel 61 verbunden werden kann, welches dem Verbindungsmittel 60 nach Figur 5 entspricht.

Die insoweit beschriebenen Verbindungsmittel 60, 61 bieten eine verlässliche und sichere, sowie einfach zu montierende Möglichkeit für die Montage mehrerer in Teilen vormontierter Anlagenteile, die die sich über mindestens zwei Transporteinheiten 11, 12 erstreckende Gefäße aufweisen. Ein solches Gefäß ist beispielsweise auch ein Schalldämpfergehäuse 62 des Schalldämpfers 30, das aus einem unteren in der ersten Transporteinheit sitzenden Teilgefäß 63 und einem zweiten in der zweiten Transporteinheit 12 untergebrachten Teilgefäß 64 besteht. Das Teilgefäß kann mit einer verschließbaren Zugangsöffnung 63a versehen sein, um einem Monteur Zugang zum Innenraum des Schalldämpfers 30 zu verschaffen.

Zwischen weiteren Teilen der insoweit beschriebenen Anlagen können andere Verbindungsmittel angeordnet sein, wie beispielsweise nach Art von Schiebe- oder Steckmuffen ausgebildete Verbindungsmittel 65 für die Rohrleitung 28 oder an den Mannübergängen 36, 37. Diese Verbindungsmittel finden beim Stapeln der Transporteinheiten ohne gesonderte Maßnahmen ineinander.

Ähnliche Steckmuffen 69 können zwischen den Transporteinheiten 11 und 14 angeordnet sein, um einen Durchgang für zu installierende Leitungen zu schaffen. Z.B. können dies elektrische Leitungen, Fluidleitungen oder ähnliches sein. Die nötigen Leitungen, z.B. die elektrische Leitung 70, können in einer der Transporteinheiten vormontiert, z.B. einseitig angeschlossen, bereitgehalten und nach dem Stapeln der Transporteinheiten 14, 11 durch die Steckmuffen 69 geführt und angeschlossen werden.

An den Mannübergängen 36, 37 können außerdem zumindest jeweils im Boden, beispielsweise an der Unterseite 22 der zweiten Transporteinheit 12, Klappen 66 (und 67 in der entsprechenden ersten Transporteinheit gemäß Figur 2) vorgesehen sein, um Sicherheit für das die jeweilige Transporteinheit 11 oder 12 begehendes Personal herzustellen. Zum Übertritt von einer Transporteinheit 11 zur anderen Transporteinheit 12 kann die Leiter 35 dienen. Die Leiter 34 in der weiteren Transporteinheit 14 kann zum Übertritt in die erste Transporteinheit 11 dienen. Die zuunterst angeordnete Transporteinheit kann eine Einstiegsluke oder gemäß Figur 2 eine Tür 68 aufweisen. Die übereinander gestapelten Transporteinheiten 14, 11, 12 bilden somit ein Gebäude, das in Teilen an den Aufbauort gebracht und dort mit geringem Installationsaufwand fertig gestellt und in Betrieb genommen werden kann.

Nach Montage aller Einbauten sind die Transporteinheiten 11, 12 (und/oder 14) transportfähig und werden in diesem Zustand an den Aufbauort verbracht. Am Aufbauort werden die zu nutzenden Transporteinheiten, z.B. die Transporteinheiten 11, 12 übereinandergestapelt angeordnet. Dies gilt sowohl für die Ausführungsform nach Figur 1, als auch für die Ausführungsform nach Figur 2. Beim Aufeinandersetzen der Transporteinheiten 11, 12 werden die Transporteinheiten 11, 12 durch ihre Eckbeschläge 19a, 19b sowie gegebenenfalls dazwischen angeordnete Abstandshalter 20 relativ zueinander positioniert. Dabei setzen auch die inneren Abschnitte 47, 57 der Flanschelemente 44, 54 aufeinander auf. Infolge des Abstands D des äußeren Flansches 45 von dem Profilelement 39 sowie des äußeren Flansches 55 von dem Profilelement 49 können dabei Höhendifferenzen etwas ausgeglichen und eine statische Überbestimmung vermieden werden. Ebenso können die gekröpften nach innen gerichteten Abschnitte 47, 57 geringfügig federnd nachgeben. Sollte zwischen den inneren Enden der Flanschelemente 44, 54 ein geringer Spalt verbleiben, kann dieser mittels der Schrauben 58 zusammengezogen werden.

Die nach außen gerichteten Radialflansche 45, 55 und die zugeordneten Flanschelemente 44, 54 bilden ein Verbindungsmittel, mit dem die Behälterteile 25, 26 ausreichend fluiddicht am Aufbauort durch einen Monteur von der Innenseite des Behälters 24 aus verbunden werden können. Zugang zu dem Zwischenraum 23 ist nicht nötig.

Die erfindungsgemäße Anlage 10 umfasst wenigstens zwei Transporteinheiten 11, 12, die Transporteinheiten übergreifende Aggregate, insbesondere die Transporteinheiten übergreifende Behälter (24, 39, 62) aufweisen, die entsprechend der von den Transporteinheiten vorgegebenen Unterteilung in Teilgehäusen 25, 26 unterteilt sind. Vorzugsweise sind alle Schnittstellen von Transporteinheiten übergreifenden Behältern in einem Zwischenraum 23 zwischen der Oberseite 21 der unteren Transporteinheit 11 und der Unterseite 22 an der oberen Transporteinheit 12 angeordnet. Dieser Zwischenraum ist vorzugsweise zu eng, um nach dem Stapeln der beiden Transporteinheiten Zugang zu gewähren. An den Behälterteilen und den Transporteinheiten vormontierte Flanschelemente 44, 54 stellen sowohl die Verbindung zwischen den Behälterteilen 25, 26 und den Transporteinheiten 11, 12 her, als auch ermöglichen sie eine Endmontage vom Behälterinnenraum her. Damit ermöglicht die Erfindung eine weitgehende Vormontage der Transporteinheiten und eine schnelle, sichere und effiziente Errichtung der Anlage am Aufbauort.

### Bezugszeichen:

- 10: Anlage
- 11: erste Transporteinheit
- 12: zweite Transporteinheit
- 13: Gestell
- 14: weitere Transporteinheit
- 15 - 17: Gehäuse/ Schiffscontainer
- 18: Wanne
- 19: Eckbeschläge
- 20: Abstandshalter
- 21: Oberseite der ersten Transporteinheit 11
- 22: Unterseite der zweiten Transporteinheit 12
- 23: Zwischenraum
- 24: Filterbehälter
- 25 - 27: Behälterteile
- 25a: Einstiegsöffnung
- 26a: Berstscheibe
- 28: Rohrleitungen
- 29: Gebläse
- 30: Schalldämpfer
- 31: Austrageinrichtung
- 32: Kompressor
- 33: Schaltschrank
- 34, 35: Leitern
- 36, 37: Mannübergänge
- 38: Öffnung
- 39: Winkelprofil / Profilelement
- 40, 41: Schweißnähte
- 42: horizontaler Schenkel des Winkelprofils 39
- 43: Bohrungen
- 44: Flanschelement
- 45: Radialflansch
- D: Distanz

- 46: äußerer Abschnitt des Flanschelements 44
- 47: innerer Abschnitt des Flanschelements 44
- 48: Öffnung in der Unterseite 22
- 49: Profilelement
- 50, 51: Schweißnähte
- 52: horizontaler Schenkel des Profilelements 49
- 53: Bolzen
- 54: Flanschelement
- 55: Radialflansch
- 56: äußerer Abschnitt des Flanschelements 54
- 57: innerer Abschnitt des Flanschelements 54
- 58: Schrauben
- 59: Abdeckelemente
- 60, 61: Verbindungsmittel
- 62: Schalldämpfergehäuse
- 63: erstes Teilgefäß des Schalldämpfergehäuses 62
- 64: zweites Teilgefäß des Schalldämpfergehäuses 62
- 65: Verbindungsmittel
- 66, 67: Klappen
- 68: Tür
- 69: Steckmuffen
- 70: elektrische Leitung

## Patentansprüche

1. Anlage (10), insbesondere Anlage zur Luftreinigung, bestehend aus:
wenigstens einer ersten Transporteinheit (11) und einer zweiten Transporteinheit (12), die jeweils ein Gehäuse (15, 16) aufweisen,
wobei das Gehäuse (15) der ersten Transporteinheit (11) an seiner Oberseite (21) erste Verbindungsmittel (19) und das Gehäuse (16) der zweiten Transporteinheit (12) an seiner Unterseite (22) zweite Verbindungsmittel (19) aufweist, die zur Verbindung miteinander eingerichtet sind,
mit mindestens einem sich über beide Transporteinheiten (11, 12) erstreckenden Behälter (24), wobei der Behälter (24) einen ersten Behälterteil (26), der in dem ersten Gehäuse (11) angeordnet ist und einen zweiten Behälterteil (25) umfasst, der in dem zweiten Gehäuse (12) angeordnet ist,
wobei die Behälterteile (25, 26) zur Ausbildung des Behälters (24) miteinander an einer Verbindungsstelle durch ein Verbindungsmittel (60) verbunden sind.

2. Anlage nach Anspruch 1, **dadurch gekennzeichnet, dass** die Gehäuse (15, 16) Schiffscontainer sind.

3. Anlage nach einem der vorstehenden Ansprüche, **dadurch gekennzeichnet, dass** die zwischen den Behälterteilen (25, 26) ausgebildete Verbindungsstelle (60) zwischen den Gehäusen (15, 16) angeordnet ist.

4. Anlage nach einem der vorstehenden Ansprüche, **dadurch gekennzeichnet, dass** das zweite Gehäuse (16) auf das erste Gehäuse (15) aufgesetzt und mit diesem verbunden ist,

5. Anlage nach einem der vorstehenden Ansprüche, **dadurch gekennzeichnet, dass** das zwischen den Gehäusen (15, 16) Abstandshalter (20) angeordnet sind.

6. Anlage nach einem der vorstehenden Ansprüche, **dadurch gekennzeichnet, dass** zu dem Verbindungsmittel (60) ein an einem oberen Ende des ersten Behälterteils (26) angeordneter Außenflansch (45) gehört.

7. Anlage nach einem der vorstehenden Ansprüche, **dadurch gekennzeichnet, dass** zu dem Verbindungsmittel (60) ein an einem unteren Ende des zweiten Behälterteils (25) angeordneter Außenflansch (55) gehört.

8. Anlage nach einem der vorstehenden Ansprüche, **dadurch gekennzeichnet, dass** zu dem Verbindungsmittel (60) ein an einem oberen Ende des ersten Behälterteils (26) angeordneter Innenflansch (47) gehört.

9. Anlage nach einem der vorstehenden Ansprüche, **dadurch gekennzeichnet, dass** zu dem Verbindungsmittel (60) ein an einem unteren Ende des zweiten Behälterteils (25) angeordneter Innenflansch (57) gehört.

10. Anlage nach den Ansprüchen 8 und 9, **dadurch gekennzeichnet, dass** Innenflansche (47, 57) aneinander anliegend angeordnet und miteinander verbunden sind.

11. Anlage nach den Ansprüchen 6 bis 10, **dadurch gekennzeichnet, dass** jeder der Außenflansche (45, 55) jeweils mit dem jeweiligen nach innen gerichteten Flansch (47, 57) verbunden ist, wobei die nach innen gerichteten Flansche (47, 57) innerhalb des Behälters (24) miteinander verbunden sind

12. Anlage nach einem der vorstehenden Ansprüche, **dadurch gekennzeichnet, dass** der erste Behälterteil (26) ein über die Oberseite (21) des ersten Gehäuses (15) hinaus ragendes Ende aufweist.

13. Anlage nach einem der vorstehenden Ansprüche, **dadurch gekennzeichnet, dass** der zweite Behälterteil (25) unter die Unterseite (22) des zweiten Gehäuses (16) ragendes Ende aufweist.

14. Anlage nach einem der vorstehenden Ansprüche, **dadurch gekennzeichnet, dass** das erste Gehäuse (15) an seiner Oberseite (21) eine Mannöffnung (36) aufweist und dass das zweite Gehäuse (16) an seiner Unterseite (22) eine Mannöffnung (36) aufweist.

15. Verfahren zur Errichtung einer Anlage (10) zur Luftreinigung, nach einem der vorstehenden Ansprüche, bei dem
die erste Transporteinheit (11) und die zweite Transporteinheit (12) an einer von einem Aufbauort entfernten Werkstelle bereitgestellt und danach im Straßentransport an den Aufbauort verbracht werden,
auf das Gehäuse (15) der ersten Transporteinheit (11) das Gehäuse (16) der zweiten Transporteinheit (12) aufgesetzt und mit diesem verbunden wird,
wonach die Verbindungsmittel (19) miteinander verbunden werden,
wonach der erste Behälterteil (26) und der zweite Behälterteil (25) durch von dem Innenraum des Behälters (24) her montierbare Mittel (58) miteinander verbunden werden.
